# EUROPÄISCHE PATENTSCHRIFT

(11) **EP 3 561 441 B1**
(45) Veröffentlichungstag und Bekanntmachung des Hinweises auf die Patenterteilung: **27.07.2022**
(21) Anmeldenummer: 19170057.4
(22) Anmeldetag: 18.04.2019
(51) Int. Cl.: G01B 3/28, G01B 3/48, G01L 5/24

(54) **GEWINDEGERÄT ZUM PRÜFEN VON GEWINDEN**
THREAD DEVICE FOR TESTING OF THREADS
APPAREIL DE FILETAGE PERMETTANT DE VÉRIFIER LES FILETAGES

(30) Priorität: 23.04.2018 DE 202018102259 U
(43) Veröffentlichungstag der Anmeldung: 30.10.2019
(73) Patentinhaber: Diatest Hermann Költgen GmbH, 64289 Darmstadt (DE)
(72) Erfinder: ORIO, Florian, 64287 Darmstadt (DE)
(74) Vertreter: Blumbach · Zinngrebe Patentanwälte PartG mbB

(56) Entgegenhaltungen:
- EP-A2- 0 459 262
- DE-A1- 3 534 115
- DE-A1- 4 324 109
- DE-A1-102007 028 615
- DE-U1-202004 018 244
- FR-A1- 2 647 202

## Beschreibung

Die Erfindung betrifft ein Gewindeprüfgerät zum Prüfen von Gewinden, wobei das Gewindeprüfgerät ein Gehäuse und eine in dem Gehäuse angeordnete Lagerung zum drehbaren Lagern eines Gewindelehrdorns zum Einschrauben in ein zu prüfendes Gewinde umfasst, so dass der Gewindelehrdorn in dem Gehäuse folglich drehbar angeordnet ist, und wobei das Gewindeprüfgerät zum Prüfen der Gewindetiefe eine Messerichtung zum Messen der Einschraubtiefe des drehbar gelagerten Gewindelehrdorns umfasst. Weitere Merkmaledes erfindungsgemäßen Gewindeprüfgeräts sind in Anspruch definiert.

Gewindeprüfgeräte mit einschraubbarem Gewindelehrdorn, der in einem Gehäuse drehbar angeordnet ist, und mit einer Messeinrichtung zum Messen der Einschraubtiefe des folglich drehbar gelagerten Gewindelehrdorns sind aus dem Stand der Technik bekannt. So betrifft die EP 2 180 289 B1 ein solches Gewindeprüfgerät, bei welchem ein drehbar im Gehäuse angeordneter Gewindelehrdorn über einen, auch gegenüber dem Gehäuse drehbaren Drehgriff in ein zu prüfendes Gewinde einschraubbar ist. Entsprechend wird in Folge das Gehäuse beim Eindrehen des Gewindelehrdorns nicht mitgedreht. Der Gewindelehrdorn ist gemäß diesem Stand der Technik ferner in einer Hülse angeordnet, welche wiederum axial beweglich in dem Gehäuse angeordnet ist und als Messeinrichtung zum Messen der Einschraubtiefe dient. Die Eintauchtiefe der axial verschiebbaren Hülse in das Gehäuse beim Einschraubvorgang ist das Maß für die Einschraubtiefe. Zum Ablesen der Einschraubtiefe ist auf der Hülse eine Skala mit Maßzahlen angeordnet, die über ein am Gehäuse angeordnetes Sichtfenster entsprechend ablesbar sind. Darüber hinaus kann mit einem solchen Gewindeprüfgerät gemäß EP 2 180 289 Blauch die Gewindegüte geprüft werden, d.h. ob ein zu prüfendes Gewinde in Bezug auf den umfassten Gewindelehrdorn den entsprechend vorgeschriebenen Gewindedurchmesser besitzt. Ist beispielsweise das Gewinde zu eng oder besitzt das Gewinde ggf. auch eine in Bezug auf den Gewindelehrdorn unzureichende Steigung, lässt sich der Gewindelehrdorn nicht oder zumindest nicht bis zu einer vorgeschriebenen Tiefe einschrauben. Ist das Gewinde zu weit, so lässt sich der Gewindelehrdorn ggf. in das Gewinde einsetzen, ohne hierzu jedoch eingeschraubt werden zu müssen.

Die DE 3534115 A1 offenbart eine selbsttätige Montage- und/oder Prüfeinrichtung mit einem Werkzeugarm und einer Arbeitsspindel, welche drehbar in einem am Werkzeugarm angeordneten Spindelgehäuse gelagert ist und mit einer Aufnahme für ein Montage- oder Prüfwerkzeug ausgestattet ist. Die EP 0 459 262 A2 betrifft eine Gewindeprüfeinrichtung zur Prüfung von Innengewinden mittels eines in das Innengewinde einzuschraubenden Gewindewerkzeugs.

Ein Nachteil bei derartigen Gewindeprüfgeräten ist beispielsweise, dass bei manueller Handhabung durch einen Benutzer die hierbei jeweils aufgebrachten Kräfte, wenn überhaupt nur äußerst schwer standardisierbar sind und/oder im Falle eines eventuell möglichen Einsatzes einer zusätzlichen Maschine, wie z.B. einem Manipulator mit Greifern die aufgebrachten Kräfte mit zusätzlichen Kraftsensoren entsprechend überwacht werden müssen.

Auch kann bereits ein geringer Versatz zwischen Gewinde- und Gewindelehrdornachse zu mangelhaften Prüfergebnissen führen, so dass auch die Co-Axialität zumindest bei entsprechend vorgeschriebener Prüfgenauigkeit ggf. zusätzlich zu überwachen ist.

Aufgabe der Erfindung ist es daher insbesondere, den vorgenannten Nachteilen zumindest teilweise effektiv entgegenzuwirken.

Insbesondere ist es somit eine weitere Aufgabe der Erfindung, die Handhabbarkeit eines Gewindeprüfgerätes zu verbessern, insbesondere zu vereinfachen und dessen flexible Einsatzfähigkeit zu steigern.

Zur Lösung schlägt die Erfindung ein Gewindeprüfgerät mit den Merkmalen nach Anspruch 1 vor. Bevorzugte Ausführungsformen und/oder vorteilhafte Weiterbildungen sind Gegenstand der jeweils abhängigen Ansprüche.

Dementsprechend sieht die Erfindung ausgehend von einem Gewindeprüfgerät zum Prüfen von Gewinden, welches ein Gehäuse und eine in dem Gehäuse angeordnete Lagerung zum drehbaren Lagern eines Gewindelehrdorns zum Einschrauben in ein zu prüfendes Gewinde umfasst sowie eine Messeinrichtung zum Messen der Einschraubtiefe des drehbar gelagerten Gewindelehrdorns, eine Führungs- und Kompensationseinrichtung zum Führen des Gehäuses und zum Kompensieren eines axialen Versatzes zwischen Gehäuse, Lagerung und Gewinde vor, so dass Gewindeprüfgerät und dessen flexible Handhabbarkeit auch bezüglich einer Co-Axialität für die Einhaltung vorgeschriebener Prüfgenauigkeit wesentlich verbessert ist. Weitere Merkmale des erfindungsgemäßen Gewindeprüfgeräts sind in Anspruch 1 definiert.

In praktischer Umsetzung eignet sich das erfindungsgemäße Gewindeprüfgerät folglich insbesondere auch zum automatisierten Prüfen von Gewinden, insbesondere deren Gewindegüte und Gewindetiefe, welches auch mit Greifern ausgestatteten Standard-Manipulatoren ohne zusätzliche Sensoren durchgeführt werden kann.

Ergänzend sieht die Erfindung einen elektrischen Antrieb zum rotierenden Antreiben des drehbar gelagerten Gewindelehrdorns sowie eine Drehmoment-Einstelleinrichtung zum Einstellen eines Drehmoments.

Das Prüfen von Gewinden kann folglich bei manueller Handhabung auch durch unterschiedliche Benutzer und/oder im Falle eines Einsatzes einer zusätzlichen Maschine, wie z.B. eines Manipulators mit Greifern mit denen das erfindungsgemäße Gewindeprüfgerät zur Gewindeprüfung gegriffen wird, drehmomentgesteuert erfolgen, sodass stets die vorgegebenen Prüfbedingungen hinsichtlich der Kraftbeaufschlagung auf einfache Weise eingehalten werden können. Die Spannungsversorgung des elektrischen Antriebs kann hierbei, je nach spezifischer Ausbildung, im Gewindeprüfgerät integriert sein oder von extern an das Gewindeprüfgerät, insbesondere an den elektrischen Antrieb angebunden sein. Das Gewindeprüfgerät ist folglich wesentlich flexibler einsetzbar und Handhabbarkeit des Gewindeprüfgerätes wesentlich vereinfacht und verbessert.

Weitere Merkmale und Vorteile der Erfindung ergeben sich aus der nachfolgenden Beschreibung zweckmäßiger Ausgestaltungen anhand der beigefügten Zeichnungen.

In den Zeichnungen zeigen
- Fig. 1: eine erste zweckmäßige Ausführungsform eines Gewindeprüfgeräts nach der Erfindung,
- Fig. 2: eine Prinzipskizze betreffend eine Drehmomentsteuerung im Rahmen der Erfindung,
- Fig. 3: eine zweite zweckmäßige Ausführungsform eines Gewindeprüfgeräts nach der Erfindung,
- Fig. 4: eine zweckmäßige Ausführungsform einer Führungs- und Kompensationseinrichtung für ein Gewindeprüfgerät im Rahmen der Erfindung, und
- Fig. 5: eine teilweise geschnittene Ansicht einer Prinzipskizze betreffend eine zur digitalen Einstellung und/oder Erfassung ausgebildeten Einstell- und die Erfassungseinrichtung im Rahmen der Erfindung.

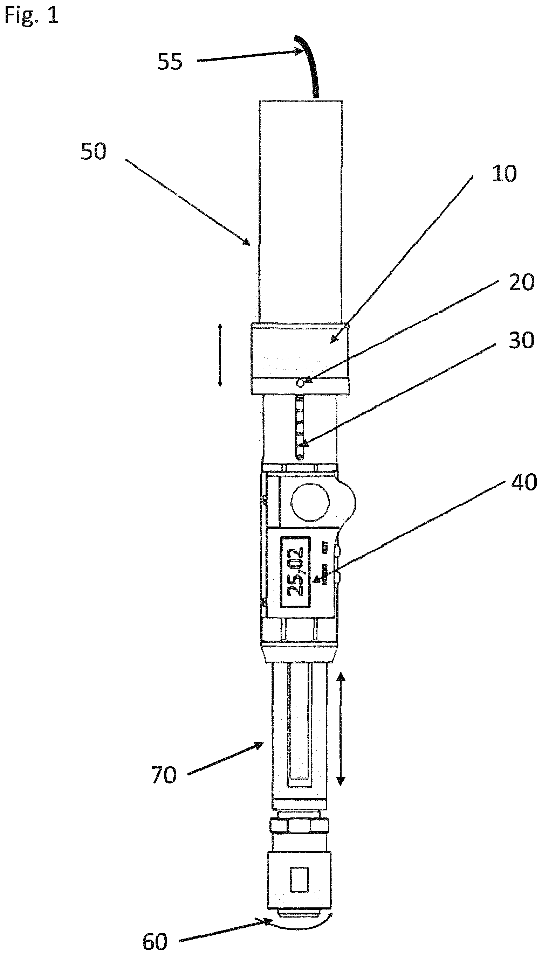

Die Fig. 1 zeigt eine zweckmäßige Ausführungsform eines Gewindeprüfgeräts nach der Erfindung. Das Gewindeprüfgerät umfasst ein Gehäuse 50, welches in dem dargestellten Beispiel im Wesentlichen zylinderförmig ausgebildet ist.

Im Gehäuse 50 ist ein Gewindelehrdorn 60, von welchem lediglich das vorderste Ende sichtbar dargestellt ist, in einer im Gehäuse angeordneten und daher nicht sichtbaren Lagerung drehbar gelagert, so dass der Gewindelehrdorn 60 mit einem daran in an sich bekannter Weise ausgebildeten Prüfgewinde durch Rotation in ein zu prüfendes Gewinde einschraubbar ist, ohne das Gewindeprüfgerät selbst hierbei drehen zu müssen. Die Lagerung ist zweckmäßig zur Lagerung von austauschbaren Gewindelehrdornen ausgebildet, zweckmäßig eine ein Spannfutter oder eine magnetische Halterung umfassende Lagerung, so dass auch Gewindelehrdorne mit unterschiedlichen Gewindedurchmessern austauschbar einsetzbar sind, insbesondere zum Prüfen der Gewindegüte eines bestimmten Gewindes und/oder zum Prüfen von entsprechend unterschiedlichen Gewinden. In Bezug auf das diesbezügliche Grundprinzip kann hierbei z.B. auf die EP 2 180 289 B1 verwiesen werden. Anstelle eines dort offenbarten manuell zu bedienenden Drehknopfs, der mit der Lagerung zum Antreiben des drehbar gelagerten Gewindelehrdorns gekoppelt ist, sieht die Ausführungsformen nach Fig. 1 zum rotierenden Antreiben des drehbar gelagerten Gewindelehrdorns zweckmäßig einen im Gehäuse 50 umfassten elektrischen Antrieb vor. Die Spannungsversorgung kann extern des Gewindeprüfgerätes angeordnet sein und beispielsweise mittels angedeuteter Kabelführung 55 an das Gewindeprüfgerät, insbesondere den Antrieb angebunden sein, oder alternativ auch im Innern des Gehäuses 50 angeordnet sein, beispielsweise in Art einer Batterie oder eines Akkumulators.

Spannungsversorgungen und elektrische Antriebe, welche elektrische Energie in eine mechanische Drehbewegung umwandeln zum Bewirken einer Rotationsbewegung sind dem Fachmann grundsätzlich bekannt und daher aus Gründen der Übersichtlichkeit in der Fig. 1 nicht weiter dargestellt. Zum Messen der Einschraubtiefe des drehbar gelagerten Gewindelehrdorns besitzt das Gewindeprüfgerät eine entsprechende Messeinrichtung. Ähnlich wie bei der EP 2 180 289 B1 kann hierbei beispielsweise ferner eine axial beweglich in dem Gehäuse 50 angeordnete Hülse 70 als Messlehre vorgesehen sein, in welcher der Gewindelehrdorn 60 angeordnet ist, sodass die Eintauchtiefe der axial verschiebbaren Hülse 70 in das Gehäuse 50 beim Einschraubvorgang als Maß für die Einschraubtiefe des Gewindelehrdorns 60 in ein zu prüfendes Gewinde dient. Anstelle einer Hülse, die insbesondere auch zum zusätzlichen mechanischen Schutz des Gewindelehrdorns 60 dient, kann jedoch z.B. auch ein im Gehäuse 50 axial beweglich angeordneter Maßstab vorgesehen sein. Die Einschraubtiefe kann jedoch z.B. auch anderweitig erfasst werden, beispielsweise über eine optische oder anderweitige sensorische Abstandserfassung zwischen Gehäuse und Gewinde während des Einschraubvorgangs des Gewindelehrdorns 60 in das zu prüfende Gewinde.

Zum Ablesen der Einschraubtiefe für einen Benutzer ist am Gehäuse 50 eine Anzeige 40 integriert. Gemäß dargestelltem Ausführungsbeispiel zeigt diese die Einschraubtiefe in digitaler Form an. Das Messen der Einschraubtiefe erfolgt somit zweckmäßig mittels elektronischer Bauelemente, z.B. einschließlich induktiver Detektion der Eintauchtiefe oder Detektion der Eintauchtiefe mittels Photodioden und Ausgabe von der Eintauchtiefe entsprechenden digitalen Einschraubtiefenwerten. Grundsätzlich kann jedoch die Messeinrichtung auch auf eine andere Art die Abstandserfassung zwischen Gehäuse und Gewinde bewirken, z.B. optisch, oder auch eine andere Art einer axial zum Gehäuse verschiebbare Messlehre besitzen, deren Eintauchtiefe, wie vorstehend beschrieben erfasst werden kann oder über welche dann ähnlich zum Gewindeprüfgerät nach EP 2 180 289 B1 die Einschraubtiefe anzeigbar ist.

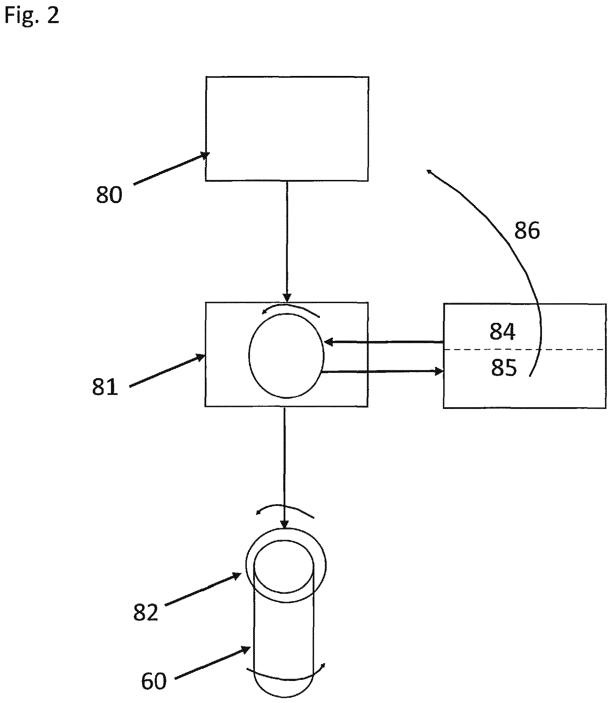

In weiterer Ausführung ist ferner zweckmäßig vorgesehen, das Gewindeprüfgerät mit einer Drehmoment-Einstelleinrichtung zum Einstellen eines Drehmoments bereitzustellen und zweckmäßig ferner auch mit einer Erfassungseinrichtung zum Erfassen des auf den drehbar gelagerten Gewindelehrdorn wirkenden Drehmoments insbesondere durch Überwachung des Antriebes. Fig. 2 zeigt hierzu eine Prinzipskizze betreffend eine Drehmomentsteuerung im Rahmen der Erfindung. Über eine Spannungsversorgung 80 wird ein elektrischer Antrieb 81 gespeist, der die Energie in eine Drehbewegung umwandelt und entsprechend eine drehbare Lagerung 82, in welcher ein Gewindelehrdorn 60 aufgenommen und also drehbar gelagert ist, rotierend antreibt. Über eine bei Fig. 2 skizzierte Drehmoment-Einstelleinrichtung 84 wird ein Drehmoment, insbesondere ein vorgegebenes Drehmoment des Antriebes eingestellt. In einfachster Ausführung kann der Antrieb lediglich mit dem vorgegebenen Drehmoment rotieren und blockiert andernfalls, sodass der Einschraubvorgang des Gewindelehrdorns nicht weiter fortgesetzt werden kann. Vorteilhafter Weise kann jedoch zusätzlich ein als "Leerdrehmoment" vorgegebenes Drehmoment definiert sein, welches zur Überwindung einer bestimmten Anfangsreibung beim Einschrauben des Gewindelehrdorns 60 in ein zu prüfendes Gewinde zunächst benötigt wird.

In weiterer Ausführung kann insbesondere auch ein maximales Drehmoment über die Drehmoment-Einstelleinrichtung 84 vorgegeben werden, wobei ein jeweils aktuell auf den drehbar gelagerten Gewindelehrdorn wirkendes Drehmoment, zweckmäßig ferner über die bei Fig. 2 skizzierte Erfassungseinrichtung 85 direkt oder indirekt erfasst wird. Hierzu kann insbesondere das jeweils aktuell vom Antrieb aufzuwendende Drehmoment erfasst werden. Die Erfassungseinrichtung 85 ist darüber hinaus ferner ausgebildet zum Abschalten des Antriebes 81 oder zum Lösen der Kopplung zwischen Antrieb 81 und Lagerung 82, wie mit dem mit dem Bezugszeichen 86 belegten Pfeil angedeutet. Insbesondere kann die Erfassungseinrichtung 85 auch ausgebildet und angeordnet sein, die Spannungsversorgung 80 abzuschalten.

Die Einrichtungen 84 und 85 können ferner, wie bei Fig. 2 angedeutet, in einer gemeinsamen Steuereinheit und/oder im Gehäuse 50 angesiedelt. sein.

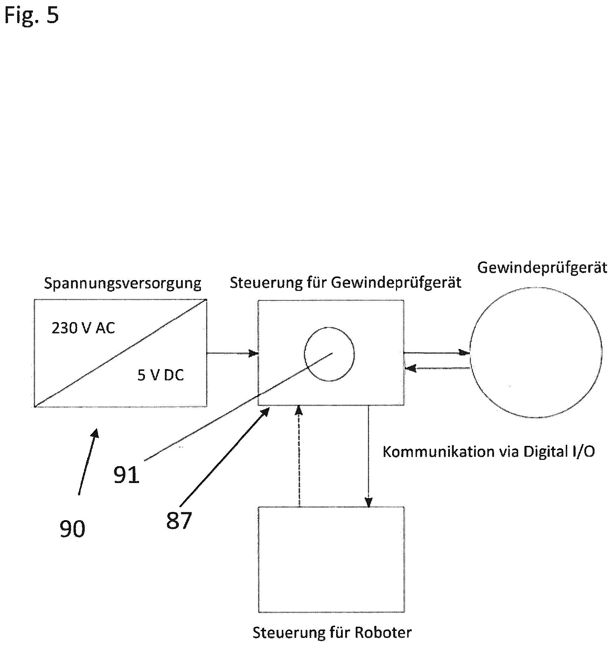

Fig. 5 eine Prinzipskizze betreffend eine zur digitalen Einstellung und/oder Erfassung ausgebildeten Einstell- und die Erfassungseinrichtung im Rahmen der Erfindung.

So kann zweckmäßig eine vorteilhafte Umsetzung von einer Wechsel- auf eine Gleichstromversorgung mittels eines AC/DC-Umsetzers 90 vor dem Antrieb 81 bzw. dem Gewindeprüfgerät erfolgen.

Die Drehmoment-Einstelleinrichtung 84, beispielsweise innerhalb der vorerwähnten Steuereinheit, kann ferner bevorzugt zur digitalen Einstellung des Drehmoments ausgebildet sind, insbesondere mittels eines codierten Drehschalters 91 zum Einstellen des Drehmoments, vorzugsweise des maximalen Drehmoments. Die weitere Kommunikation erfolgt somit bevorzugt über eine digitale Input/Output Datenübertragung sowohl zum Antrieb bzw. Gewindeprüfgerät als auch zur Erfassungseinrichtung 85, welche gemäß Fig. 5 in einer gemeinsamen Steuereinheit zusammen die Steuerung 87 für das Gewindeprüfgerät ausbilden. Ist ferner ein Manipulator zum Handhaben und also auch zum Greifen des Gewindeprüfgerätes vorgesehen, erfolgt diesbezüglich in praktischer Umsetzung auch eine Kommunikation über eine digitale Input/Output Datenübertragung zwischen der Steuerung des Manipulators, bei Fig. 5 mit Roboter bezeichnet, und der Steuerung 87.

Ein wesentlicher Vorteil der Umsetzung von einer Wechselauf eine Gleichstromversorgung mittels eines AC/DC-Umsetzers 90 vor dem Antrieb 81 bzw. dem Gewindeprüfgerät kann darin gesehen werden, dass die im Gewindeprüfgerät integrierten elektrischen Komponenten wesentlich gewichtsreduzierter ausgelegt werden können. Die Handhabung des Gewindeprüfgeräts ist folglich nochmals vereinfacht.

Ist der Einschraubvorgang beendet oder kann ein weiteres Eindringen des Gewindelehrdorns 60 in ein zu prüfendes Gewinde mit der vom Gewindeprüfgerät umfassten Messeinrichtung zum Messen der Einschraubtiefe des drehbar gelagerten Gewindelehrdorns nicht ermittelt werden, kann eine solche Steuereinheit oder auch die Erfassungseinrichtung insbesondere bei Einsatz eines Manipulators auch ausgebildet sein, beispielsweise über das Bewirken eines Schaltens von hierzu vorgesehenen Kontakten in einen potentialfreien Zustand, eine Rückmeldung an diesen zu geben, beispielsweise über eine wie bei Fig. 1 skizzierte Kabelführung 55, dass die Endtiefe erreicht worden ist. Auch hierzu hat sich das Messen der Einschraubtiefe mittels elektronischer Bauelemente und Ausgabe bzw. Weitergabe von der Eintauchtiefe entsprechenden digitalen Einschraubtiefenwerten als zweckmäßig gezeigt.

Erfindungsgemäß besitzt das Gewindeprüfgerät eine Führungs- und Kompensationseinrichtung 10 zum Führen des Gehäuses und zum Kompensieren eines axialen Versatzes zwischen Gehäuse, Gewindelehrdorn bzw. Lagerung des Gewindelehrdorns und zu prüfendem Gewinde.

Hierzu ist die Führungs- und Kompensationseinrichtung 10 zweckmäßig um wenigstens zwei Achsen senkrecht zur Längsachse des Gehäuse verschwenkbar am Gehäuse angeordnet. Bei dem Ausführungsbeispiel nach Fig. 1 ist z.B. ein sich in das Gehäuse erstreckender Lagerungsbolzen 20, um dessen Achse sich die Führungs- und Kompensationseinrichtung 10 in Bezug auf das Gehäuse verschwenken kann, angedeutet. Wird das erfindungsgemäß vorteilhaft mit einer Führungs- und Kompensationseinrichtung 10 ausgestattete Gewindeprüfgerät jedoch bestimmungsgemäß an der Führungs- und Kompensationseinrichtung 10 zum Einschrauben eines Gewindelehrdorns in ein zu prüfendes Gewinde gegriffen, kann sich folglich das Gehäuse mit dem darin drehbar gelagerten Gewindelehrdorn gemäß Ausführungsbeispiel nach Fig. 1 um diesen Lagerungsbolzen 20 verschwenken. Derartige Lagerungsbolzen 20 sind bei diesem Ausführungsbeispiel folglich ferner bevorzugt derart im Gehäuse aufgenommen, dass der Führungs- und Kompensationseinrichtung 10 auch eine axiale Bewegungsfreiheit ermöglicht ist, insbesondere, damit ein Verschwenken auch um eine quer zu einer ersten Achse, z.B. um den Lagerungsbolzen 20 angeordneten weiteren Lagerungsbolzen, insbesondere in der selben Ebene liegend, auf einfache Weise ermöglicht werden kann.

Die Führungs- und Kompensationseinrichtung, welche zum Halten des Gewindeprüfgerätes zum Einschrauben eines Gewindelehrdorns in ein zu prüfendes Gewinde bestimmungsgemäß an der Führungs- und Kompensationseinrichtung 10 zu greifen ist, ist jedoch zweckmäßig verdrehfest gegenüber dem Gehäuse an diesen angeordnet, sodass diese auch zum Aufnehmen von entstehenden Drehmomenten dient.

Ist die Führungs- und Kompensationseinrichtung 10 erfindungsgemäß auch axial beweglich am Gehäuse 50 angeordnet bzw. an diesem gehalten, ermöglicht dies ferner eine Führung des Gewindeprüfgerätes während der Gewindeprüfung ohne, dass der ausführende Benutzer oder Manipulator hierzu noch eine weitere Bewegung durchführen muss. Hierzu können z.B. axial verlaufende Führungsschlitze 30 im Gehäuse 50 vorgesehen sein, entlang welcher die Führungs- und Kompensationseinrichtung 10 bewegt werden kann. Wird nämlich z.B. nach Greifen der Führungs- und Kompensationseinrichtung 10 das Gewindeprüfgerät mit dessen Gewindelehrdorn an das zu prüfende Gewinde herangeführt und nach Aufsetzen bzw. Ansetzen des Gewindeprüfgeräts an das zu prüfende Gewinde bzw. das Bauteil mit dem zu prüfenden Gewinde die Führungs- und Kompensationseinrichtung 10 zunächst vor dem eigentlichen Prüf- bzw. Einschraubvorgang axial bis zu einer Endstellung in Richtung des zu prüfenden Gewindes verschoben und anschließend der Prüf- bzw. Einschraubvorgang gestartet, kann der Gewindelehrdorn 60 beim Einschrauben in das zu prüfende Gewinde beim Einschrauben das Gehäuse 50 wieder entgegengesetzt durch die Führungs- und Kompensationseinrichtung 10 axial hindurchziehen ohne, dass hierbei die Führungs- und Kompensationseinrichtung 10, noch insbesondere axial, bewegt werden muss.

Die Führungs- und Kompensationseinrichtung 10 kann hierzu folglich zweckmäßig zum Umfassen des Gehäuses 50 und mit einem Innendurchgang ausgebildet sein, durch den sich das Gehäuse 50 erstreckt, zumindest bereichsweise mit Spiel zum Verschwenken.

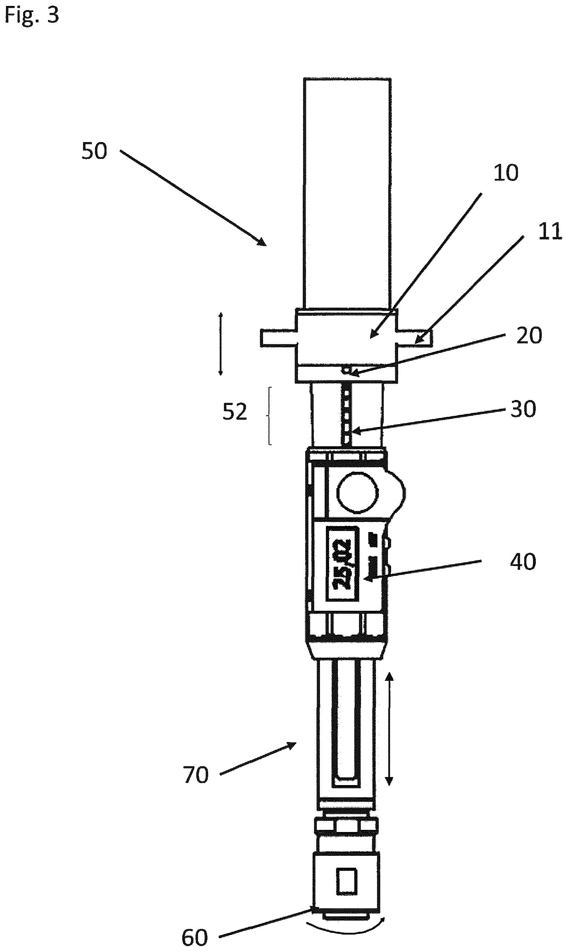

Fig. 3 zeigt, dass das Gehäuse 50 in einer ersten erfindungsgemäßen Ausführung im Bereich der axialen Verschiebbarkeit bzw. Bewegungsfreiheit der Führungs- und Kompensationseinrichtung 10 konisch 52 ist. Der Konus 52 verjüngt sich hierbei zweckmäßig in Richtung des Gewindelehrdorns 60. Hierdurch wird eine maximale Verschwenkbarkeit der Führungs- und Kompensationseinrichtung 10 beim Ansetzen des Gewindeprüfgeräts an das zu prüfende Gewinde ermöglicht. Axiale Fehlstehlungen beim Starten eines jeglichen Gewindeprüfvorganges können somit wesentlich effektiverer kompensiert werden. Durch die Wahl des Konus kann folglich insbesondere auch eine maximale Kompensation eines axialen Versatzes zwischen Gehäuse, Lagerung und Gewinde voreingestellt werden.

Beim Einschraubvorgang, bei welchen das Gehäuse 50 durch den Gewindelehrdorn 60 wieder entgegengesetzt, d.h. in Richtung des zu prüfenden Gewindes durch die Führungs- und Kompensationseinrichtung 10 axial hindurchgezogen wird, kann darüber hinaus der das Gewindeprüfgerät Handhabende in dessen Ausrichtung gegebenenfalls durch den Einschraubgang selbst nachgeführt und/oder korrigiert werden ohne, dass dieser selbsttätig aktiv werden muss. Ob nachgeführt und/oder korrigiert wird und wenn ja, das maximale Ausmaß kann hierbei insbesondere durch die Wahl der Durchmesserverjüngung und/oder Länge des Konus 52 beeinflusst werden. Dies hat sich bei manueller Handhabung wie auch bei Handhabung durch einen Manipulator mit Greifern, mit denen das erfindungsgemäße Gewindeprüfgerät zur Gewindeprüfung gegriffen wird, von Vorteil erwiesen, Nach Beendigung des Einschraubvorgangs hat es sich ferner von Vorteil erwiesen, bei manueller Handhabung wie auch bei Handhabung durch einen Manipulator mit Greifern mit denen das erfindungsgemäße Gewindeprüfgerät zur Gewindeprüfung gegriffen wird, die Führungs- und Kompensationseinrichtung 10 wieder in die Ausgangsstellung rückzustellen. Dies kann z.B. mittels einer einfachen, insbesondere im Innern des Gehäuses, vorzugsweise im Konus 52 angeordneten Feder, z.B. Spiralfeder bewirkt werden, welche beim Einschraubvorgang zusammengedrückt wird.

Fig. 3 zeigt eine zweckmäßige Ausführungsform, und zwar unabhängig von der Art der Führungs- und Kompensationseinrichtung 10, gemäß welcher die Führungs- und Kompensationseinrichtung mit wenigstens einem sich quer zur Längsachse des Gehäuses erstreckenden Haltefortsatz 11 ausgebildet ist, zweckmäßig zu wenigstens zwei Seiten des Gehäuses oder sich umfangsseitig zu diesem erstreckenden Haltefortsatz 11 ausgebildet ist. Ein solcher Haltefortsatz 11 kann, insbesondere je nach spezifischer Ausbildung und oder der Handhabung, zu zweierlei dienen. Erstens zum Halten des Gewindeprüfgerätes während des Einschraubvorgangs und/oder zum Halten nach dem Einschraubvorgang, d.h. insbesondere, wenn die Führungs- und Kompensationseinrichtung 10 anstelle an einem solchem Haltefortsatz 11 unterhalb des Haltefortsatz 11 während des Einschraubvorgangs gegriffen wird, d.h. zwischen Haltefortsatz und Gewindelehrdorn, und nach dem Einschraubvorgang der Griff gelockert wird, z.B. auch beim vorstehend beschriebene Bewirken eines Schaltens von Kontakten in einen potentialfreien Zustand zum Rückmeldung an einen Manipulator. Es kann somit auch verhindert werden, dass das Gewindeprüfgerät nach Beendigung des Einschraubvorgangs einfach fallen gelassen wird.

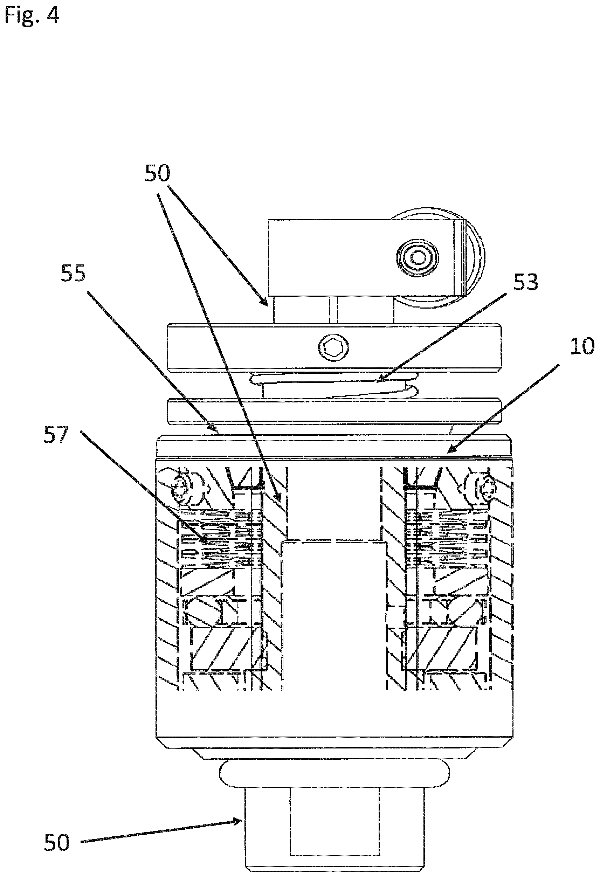

Fig. 4 zeigt eine zu den Fig. 1 und 3 weitere zweckmäßige Ausführungsform einer teilweise geschnittenen Ansicht einer Führungs- und Kompensationseinrichtung 10 im Rahmen der Erfindung.

Dort sind keine axialen Führungsschlitze im Gehäuse 50 vorgesehen, sondern das Gehäuse ist innerhalb einer Feder 57, insbesondere das Gehäuse im Bereich der Führungs- und Kompensationseinrichtung 10 umwindenden Spiralfeder gelagert, welche wiederum innerhalb der Führungs- und Kompensationseinrichtung 10 angeordnet und gehalten ist. Mittels einer solchen oder auch ähnlich ausgebildeten Federlagerung kann zunächst eine Verschwenkbewegung des Gehäuses innerhalb der Führungs- und Kompensationseinrichtung 10 bereitgestellt werden. Zum Bewirken einer Rückstellkraft, insbesondere zum Rückstellen nach Beendigung des Einschraubvorgangs kann beispielsweise diese die Führungs- und Kompensationseinrichtung 10 umwindende Spiralfeder zusätzlich als Druckfeder ausgebildet sein. Ferner ist in einer zweiten erfindungsgemäßen Ausführung, insbesondere um die Führungs- und Kompensationseinrichtung 10 wieder in eine definierte Ausgangsstellung rückzustellen z.B. eine Konushülse 55 zwischen Gehäuse 50 und Führungs- und Kompensationseinrichtung 10 angeordnet, die sich in Richtung Gewindelehrdorn verjüngt. Ergänzend kann zwischen Gehäuse 50 und umwindender Feder 57 einer Zugfeder 53 angeordnet sein. Das eine Ende der Zugfeder 53 ist hierbei am Gehäuse 50 festgelegt und das andere Ende kann zweckmäßig an der Führungs- und Kompensationseinrichtung 10 fixiert sein und/oder, je nach spezifischer Ausbildung, an der Konushülse.

## Patentansprüche

1. Gewindeprüfgerät zum Prüfen von Gewinden, mit
- einem Gehäuse (50) und einer in dem Gehäuse angeordneten Lagerung (82) zum drehbaren Lagern eines Gewindelehrdorns (60) zum Einschrauben in ein zu prüfendes Gewinde,
- einer Messeinrichtung zum Messen der Einschraubtiefe des drehbar gelagerten Gewindelehrdorns (60),und
- einer Führungs- und Kompensationseinrichtung (10) zum Führen des Gehäuses und zum Kompensieren eines axialen Versatzes zwischen Gehäuse, Lagerung und Gewinde,
wobei die Führungs- und Kompensationseinrichtung (10), zumindest bereichsweise mit Spiel zum Verschwenken, zum Umfassen des Gehäuses (50) und mit einem Innendurchgang ausgebildet ist, durch welchen sich das Gehäuse (50) erstreckt,
und die Führungs- und Kompensationseinrichtung (10) um wenigstens zwei Achsen senkrecht zur Längsachse des Gehäuses (50) verschwenkbar und axial beweglich am Gehäuse (50) angeordnet ist,
**dadurch gekennzeichnet, dass** das Gehäuse (50) im Bereich der axialen Verschiebbarkeit der Führungs- und Kompensationseinrichtung (10) konisch geformt ist oder zwischen Gehäuse (50) und Führungs- und Kompensationseinrichtung (10) eine Konushülse (55) angeordnet ist.

2. Gewindeprüfgerät nach Anspruch 1, mit einem elektrischen Antrieb (81) zum rotierenden Antreiben des drehbar gelagerten Gewindelehrdorns (60) sowie mit einer Drehmoment-Einstelleinrichtung (84) zum Einstellen eines Drehmoments.

3. Gewindeprüfgerät nach einem der vorstehenden Ansprüche, mit einer Drehmoment-Erfassungseinrichtung (85) zum Erfassen des auf den drehbar gelagerten Gewindelehrdorn (60) wirkenden Drehmoments.

4. Gewindeprüfgerät nach Anspruch 3, wobei die Drehmoment-Erfassungseinrichtung (85) ausgebildet ist, zum Abschalten (86) des Antriebes oder zum Lösen der Kopplung zwischen Antrieb und Lagerung bei Erreichen oder Überschreiten des eingestellten Drehmoments.

5. Gewindeprüfgerät nach Anspruch 2 in Kombination mit Anspruch 3 oder 4, wobei die Einstell- und die Erfassungseinrichtung (84, 85) zur digitalen Einstellung bzw. Erfassung des Drehmoments ausgebildet sind.

6. Gewindeprüfgerät nach einem der vorstehenden Ansprüche, wobei die Führungs- und Kompensationseinrichtung (10) zum Aufnehmen von entstehenden Drehmomenten verdrehfest gegenüber dem Gehäuse (50) an diesem angeordnet ist.

7. Gewindeprüfgerät nach einem der vorstehenden Ansprüche, wobei an der Führungs- und Kompensationseinrichtung (10) wenigstens ein sich quer zur Längsachse des Gehäuses (50) erstreckender Haltefortsatz (11) ausgebildet ist.

8. Gewindeprüfgerät nach einem der vorstehenden Ansprüche, wobei die Lagerung (82) zur Lagerung von austauschbaren Gewindelehrdornen (60) ausgebildet ist.

9. Gewindeprüfgerät nach einem der vorstehenden Ansprüche, wobei die Messeinrichtung eine axial zum Gehäuse (50) verschiebbare Messlehre besitzt und/oder eine im Gehäuse (50) integrierte Einschraubtiefenanzeige (40).

## Claims

1. A thread testing device for testing threads, comprising
- a housing (50) and a bearing (82) arranged in the housing for rotatably mounting a thread plug gauge (60) for being screwed into a thread to be tested;
- a measuring device for measuring the screw-in depth of the rotatably mounted thread plug gauge (60); and
- a guiding and compensation device (10) for guiding the housing and for compensating for an axial offset between housing, bearing and thread;
wherein the guiding and compensation device (10) is designed with play for pivoting, at least in sections thereof, for surrounding the housing (50), and with an inner passage through which the housing (50) extends;
and wherein the guiding and compensation device (10) is arranged on the housing (50) so as to be pivotable about at least two axes perpendicular to the longitudinal axis of the housing (50) and so as to be displaceable axially;
**characterized in that** within the range of axial displaceability of the guiding and compensation device (10), the housing (50) has a conical shape; or that a conical sleeve (55) is arranged between the housing (50) and the guiding and compensation device (10).

2. The thread testing device according to claim 1, comprising an electric drive (81) for driving the rotatably mounted thread plug gauge (60) for rotation, and comprising a torque setting device (84) for setting a torque.

3. The thread testing device according to any one of the preceding claims, comprising a torque detection device (85) for determining the torque acting on the rotatably mounted thread plug gauge (60).

4. The thread testing device according to claim 3, wherein the torque detection device (85) is adapted to switch off (86) the drive or to release the coupling between the drive and the bearing when the set torque is reached or exceeded.

5. The thread testing device according to claim 2 in combination with claim 3 or 4, wherein the setting and detection device (84, 85) is adapted for digital setting and detection of the torque.

6. The thread testing device according to any one of the preceding claims, wherein the guiding and compensation device (10) is arranged on the housing (50) in a manner so as to be fixed against rotation relative to the housing (50), for absorbing torques that arise.

7. The thread testing device according to any one of the preceding claims, wherein at least one holding extension (11) is formed on the guiding and compensation device (10), which extends transversely to the longitudinal axis of the housing (50).

8. The thread testing device according to any one of the preceding claims, wherein the bearing (82) is adapted for mounting exchangeable thread plug gauges (60).

9. The thread testing device according to any one of the preceding claims, wherein the measuring device has a measuring gauge which is displaceable axially relative to the housing (50), and/or a screw-in depth indicator (40) integrated in the housing (50).

## Revendications

1. Appareil de contrôle de filetage pour contrôler des filetages, avec
- un boîtier (50) et un support (82) disposé dans le boîtier pour le support en rotation d'une jauge-tampon de filetage (60) à visser dans un filetage à contrôler,
- un dispositif de mesure pour mesurer la profondeur de vissage de la jauge-tampon de filetage (60) montée en rotation, et
- un dispositif de guidage et de compensation (10) pour guider le boîtier et pour compenser un décalage axial entre le boîtier, le support et le filetage,
dans lequel le dispositif de guidage et de compensation (10), au moins par endroits avec jeu pour le pivotement, est réalisé pour entourer le boîtier (50) et avec un passage intérieur, à travers lequel le boîtier (50) s'étend,
et, le dispositif de guidage et de compensation (10) est disposé sur le boîtier (50) de manière à pouvoir pivoter autour d'au moins deux axes perpendiculairement à l'axe longitudinal du boîtier (50) et de manière mobile axialement,
**caractérisé en ce que** le boîtier (50) est formé de manière conique dans la zone de la capacité de déplacement axiale du dispositif de guidage et de compensation (10) ou un manchon conique (55) est disposé entre le boîtier (50) et le dispositif de guidage et de compensation (10).

2. Appareil de contrôle de filetage selon la revendication 1, avec un entraînement électrique (81) pour l'entraînement en rotation de la jauge-tampon de filetage (60) montée en rotation ainsi qu'avec un dispositif de réglage de couple (84) pour régler un couple.

3. Appareil de contrôle de filetage selon l'une quelconque des revendications précédentes, avec un dispositif de détection de couple (85) pour détecter le couple agissant sur la jauge-tampon de filetage (60) montée en rotation.

4. Appareil de contrôle de filetage selon la revendication 3, dans lequel le dispositif de détection de couple (85) est réalisé pour arrêter (86) l'entraînement ou pour libérer l'accouplement entre l'entraînement et le support lors de l'atteinte ou du dépassement du couple réglé.

5. Appareil de contrôle de filetage selon la revendication 2 en combinaison avec la revendication 3 ou 4, dans lequel le dispositif de réglage et le dispositif de détection (84, 85) sont réalisés pour le réglage ou la détection numérique du couple.

6. Appareil de contrôle de filetage selon l'une quelconque des revendications précédentes, dans lequel le dispositif de guidage et de compensation (10) pour recevoir des couples produits est disposé de manière solidaire en rotation par rapport au boîtier (50) sur celui-ci.

7. Appareil de contrôle de filetage selon l'une quelconque des revendications précédentes, dans lequel au moins un prolongement de retenue (11) s'étendant transversalement par rapport à l'axe longitudinal du boîtier (50) est réalisé sur le dispositif de guidage et de compensation (10).

8. Appareil de contrôle de filetage selon l'une quelconque des revendications précédentes, dans lequel le support (82) est réalisé pour le support de jauges-tampons de filetage (60) interchangeables.

9. Appareil de contrôle de filetage selon l'une quelconque des revendications précédentes, dans lequel le dispositif de mesure possède une jauge déplaçable axialement par rapport au boîtier (50) et/ou un indicateur de profondeur de vissage (40) intégré dans le boîtier (50).
